# EUROPÄISCHE PATENTSCHRIFT

(11) **EP 3 353 348 B1**
(45) Veröffentlichungstag und Bekanntmachung des Hinweises auf die Patenterteilung: **09.10.2019**
(21) Anmeldenummer: 16757156.1
(22) Anmeldetag: 26.08.2016
(51) Int. Cl.: E01B 27/00, E01B 29/00, E01B 31/00, E01B 33/00, B61C 3/02, B61C 9/08, B61C 9/14, B60K 6/20, B60W 20/40, B61C 7/04, B61C 17/00, B60K 6/48, B60K 6/387, B60K 6/365

(54) **GLEISBAUMASCHINE MIT AUTONOMER UND REDUNDANTER ENERGIEVERSORGUNG**
RAILWAY TRACK CONSTRUCTION MACHINE COMPRISING AN AUTONOMOUS AND REDUNDANT POWER SUPPLY
MACHINE DE CONSTRUCTION ÉNERGÉTIQUEMENT REDONDANTE ET AUTONOME POUR VOIES FERRÉES

(30) Priorität: 23.09.2015 AT 6192015
(43) Veröffentlichungstag der Anmeldung: 01.08.2018
(73) Patentinhaber: Plasser & Theurer Export von Bahnbaumaschinen Gesellschaft m.b.H., 1010 Wien (AT)
(72) Erfinder: GREINDL, Alexander, 4491 Niederneukirchen (AT)
(86) Internationale Anmeldenummer: PCT/EP2016/001444
(87) Internationale Veröffentlichungsnummer: WO 2017/050414

(56) Entgegenhaltungen:
- DE-A1- 2 232 476
- DE-A1-102013 011 125
- DE-A1-102013 219 397
- DE-U1-202010 014 117

## Beschreibung

Die Erfindung betrifft eine Gleisbaumaschine mit einem auf einem Gleis verfahrbaren Maschinenrahmen, verschiedenen Arbeitsaggregaten sowie mit einem Verbrennungsmotor, der über eine Kupplung mit einem Verteilergetriebe verbindbar ist, wobei als alternativer Antrieb des Verteilergetriebes ein Elektromotor vorgesehen ist, der mittels eines höhenverstellbaren, an eine Oberleitung des Gleises anlegbaren Stromabnehmers mit elektrischer Energie versorgbar ist. Die Erfindung betrifft auch noch ein Verfahren für den Betrieb eines Energieversorgungssystems zum Antrieb diverser Arbeitsaggregate und Antriebe einer - auf einem eine elektrische Oberleitung aufweisenden Gleis verfahrbaren - Gleisbaumaschine.

Da Gleisbaumaschinen vielfach auch auf nicht elektrifizierten Gleisen eingesetzt werden, erfolgt die Energieversorgung in der Regel ausschließlich durch einen Verbrennungsmotor. Dabei kann eine Gleisbaumaschine auch Arbeitsaggregate mit elektrischen Antrieben umfassen. Beispielsweise ist aus DE 20 2010 014 117 U1 eine Vorrichtung zur Erstellung oder zur Sanierung einer Bahnstrecke mit dieselgeneratorischen Aggregaten zur Versorgung elektrischer Antriebe bekannt.

Aus DE 2 232 476 A1 ist eine gattungsgemäße Gleisbaumaschine mit zwei unterschiedlichen Antriebsmotoren bekannt. Konkret sind dabei ein eigenständiger Verbrennungsmotor und ein Elektromotor mit Stromabnahme von einem Fahrdraht wechselweise schaltbar.

Getriebevarianten zum wahlweisen Schalten verschiedener Antriebsmotoren sind aus DE 10 2013 219 397 A1 und DE 10 2013 011 125 A1 bekannt.

Die Aufgabe der vorliegenden Erfindung liegt nun in der Schaffung einer Gleisbaumaschine sowie eines Verfahrens der eingangs genannten Art, mit der bzw. dem ein vielseitigerer Baustelleneinsatz möglich ist.

Diese Aufgabe wird erfindungsgemäß durch die im Kennzeichen von Anspruch 1 bzw. 5 angeführten Merkmale gelöst.

Durch diese Merkmalskombinationen ist es möglich, im Falle einer vorhandenen Gleisoberleitung eine umweltfreundlichere Energieversorgung zu nützen, ohne dass damit die Arbeitsleistung der Gleisbaumaschine beeinträchtigt wird. Diese Möglichkeit eines rein elektrischen Antriebs ist insbesondere beim Arbeitseinsatz in Tunnels sehr vorteilhaft. Außerdem können mit dem Elektroantrieb die Lärmemission sowie der Energieverbrauch deutlich reduziert werden. Durch einen Wechsel der Energieversorgung im Lastbetrieb ist keine Unterbrechung der Arbeitsvorfahrt erforderlich und somit eine gleichbleibende Arbeitsqualität sichergestellt.

Konkret geschieht ein Umschalten zwischen Elektromotor und Verbrennungsmotor ohne Antriebsunterbrechung des Verteilergetriebes, sodass die diversen hydraulischen Antriebe und Arbeitsaggregate gleichmäßig weiterlaufen. Das ist insbesondere bei kontinuierlich arbeitenden Gleisbaumaschinen wie Stopfmaschinen, Reinigungsmaschinen, Planierungsmaschinen oder Maschinen zur Stabilisierung und Verdichtung der Gleisbettung sowie zur Schotterentnahme und Schotterverteilung von Vorteil. Bei dieser Art von Maschinen ist zudem davon auszugehen, dass eine Oberleitung während eines Arbeitsprozesses eingeschaltet bleibt. Anders verhält es sich gewöhnlich bei Bautätigkeiten an der Oberleitung.

Weitere Vorteile der Erfindung ergeben sich aus den Unteransprüchen und der Zeichnungsbeschreibung.

So sind vorteilhafterweise der Verbrennungsmotor und der Elektromotor mittels einer Steuereinrichtung angesteuert, die zur Abstimmung von Betriebsparametern zwischen den beiden Motoren eingerichtet ist. Damit erfolgt in einfacher Weise eine kontinuierliche Leistungsübernahme durch den zugeschalteten Motor, indem die Drehzahl und das Drehmoment des wegzuschaltenden Motors übernommen werden.

Des Weiteren ist es von Vorteil, wenn der Elektromotor zur alternativen Energieversorgung des Zwischenkreises in einem generatorischen Betrieb durch den Verbrennungsmotor antreibbar ist. Das kann einerseits bei einem Energieüberschuss während einer Bremsphase nützlich sein. Andererseits ist damit auch eine weitere Möglichkeit zur permanenten Versorgung des Zwischenkreises mit weggeschaltetem Stromabnehmer geschaffen. Der erfindungsgemäß vorgesehene Generator oder der elektrische Energiespeicher müssen dann lediglich für eine Aufladung des Zwischenkreises zu Beginn eines reinen Verbrennungsmotorbetriebs ausgelegt sein. Ein über den Zwischenkreis gespeistes Bordnetz der Gleisbaumaschine wird auf diese Weise mittels des Elektromotors im generatorischen Betrieb aufrechterhalten.

Dabei ist es zudem günstig, wenn an den Zwischenkreis ein Spannungsbegrenzer angeschlossen ist. Dieser ist beispielsweise geeignet, um überschüssige Bremsenergie, die nicht in die Oberleitung einspeisbar ist, in Wärme umzuwandeln.

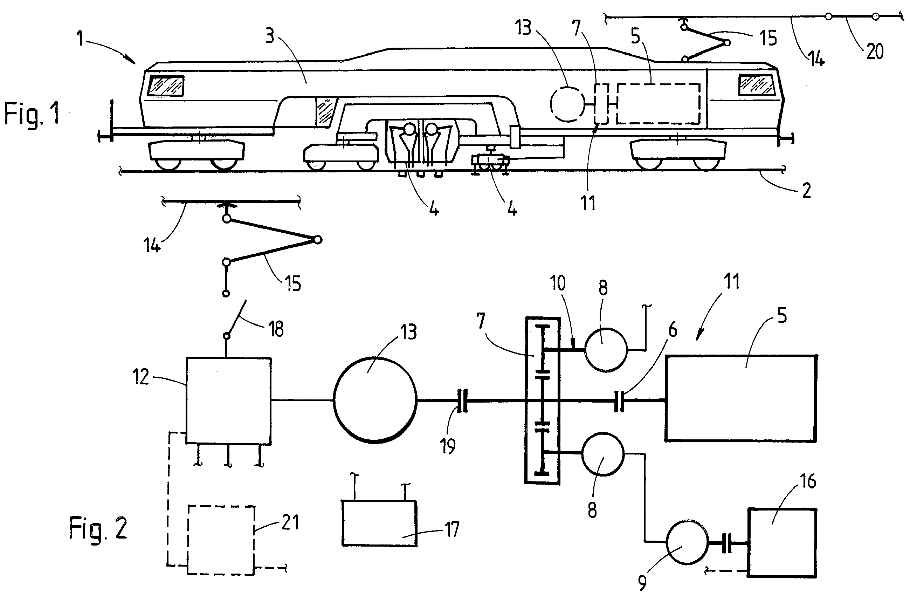

Im Folgenden wird die Erfindung anhand eines in Zeichnungen dargestellten Ausführungsbeispiels näher beschrieben. Es zeigen: Fig. 1 eine vereinfachte Seitenansicht einer Gleisbaumaschine und Fig. 2 eine schematische Darstellung eines Energieversorgungssystems.

Eine in Fig. 1 beispielsweise als Stopfmaschine dargestellte Gleisbaumaschine 1 mit einem auf einem Gleis 2 verfahrbaren Maschinenrahmen 3 ist mit verschiedenen Arbeitsaggregaten 4 sowie mit einem Verbrennungsmotor 5 ausgestattet. Wie in Fig. 2 ersichtlich, ist dieser über eine Kupplung 6 mit einem Verteilergetriebe 7 verbindbar. An dieses sind Hydraulikpumpen 8 zur Versorgung diverser hydraulischer Antriebe 9 angeflanscht. Diese bilden zusammen mit den Hydraulikpumpen 8 ein Hydrauliksystem 10.

Für eine Erweiterung eines durch den Verbrennungsmotor 5 und das Hydrauliksystem 10 gebildeten Energieversorgungssystems 11 ist ein mit einem elektrischen Zwischenkreis 12 gekoppelter Elektromotor 13 vorgesehen. Dieser ist als alternativer Antrieb für das Verteilergetriebe 7 einsetzbar und zur Energieversorgung mit einem höhenverstellbaren, an eine Oberleitung 14 des Gleises 2 anlegbaren Stromabnehmer 15 koppelbar. Der Elektromotor 13 ist über eine Rutschkupplung 19 an das Verteilergetriebe 7 angeflanscht. Zur alternativen Energieversorgung des Zwischenkreises 12 ist ein Generator 16 oder alternativ ein hier mit gestrichelten Linien dargestellter elektrischer Energiespeicher 21 vorgesehen. Der Generator 16 ist über das Verteilergetriebe 7 hydraulisch antreibbarer oder an einen Hilfsverbrennungsmotor gekoppelt. Der elektrische Energiespeicher 21 kann wahlweise mittels des Elektromotors im generatorischen Betrieb oder über die Oberleitung 14 mit Energie aufgeladen werden.

Für den Arbeitseinsatz kann das Hydrauliksystem 10 alternativ durch den Verbrennungsmotor 5 oder im Falle einer vorhandenen Oberleitung 14 durch den von der Oberleitung 14 gespeisten Elektromotor 13 mit Energie versorgt werden. Die Umschaltung zwischen Verbrennungs- und Elektromotor 5 bzw. 13 wird vorteilhafterweise in einem die Antriebe 9 und Arbeitsaggregate 4 permanent mit Energie versorgenden Lastbetrieb durchgeführt. Damit ist keine nachteilige Unterbrechung der Arbeitsvorfahrt erforderlich.

Günstigerweise ist der Elektromotor 13 als Asynchronmaschine ausgebildet, welche über einen Umrichter an den Zwischenkreis 12 geschaltet ist. Ein bidirektionaler Umrichter ermöglicht einen generatorischen Betrieb des Elektromotors 13. Bei Aktivierung dieses Betriebsmodus muss an der Asynchronmaschine eine Erregerspannung anliegen. Wird diese aus der Zwischenkreisspannung abgeleitet, muss der Zwischenkreis 12 zunächst aufgeladen werden. Dies geschieht bei verfügbarer Oberleitung 14 mittels des Stromabnehmers 15, der über einen Hauptschalter 18 und einen nicht dargestellten Transformator mit dem Zwischenkreis 12 gekoppelt ist. Im reinen Verbrennungsmotorbetrieb wird der Zwischenkreis 12 mittels des Generators 16 oder des elektrischen Energiespeichers 21 vorgeladen.

Für einen unter uneingeschränktem Lastbetrieb der Gleisbaumaschine 1 erfolgenden Wechsel der Energieversorgung vom Elektro- zum Verbrennungsmotor 13 bzw. 5 wird letztgenannter bei einer von dem Verteilergetriebe 7 gelösten Kupplung 6 auf eine für den Lastbetrieb erforderliche Drehzahl hochgefahren. Diese Umstellung der Energieversorgung wird vorteilhafterweise unter Betätigung eines entsprechenden Schalters automatisch durchgeführt. Als nächster Schritt wird mit einem Schließen der Kupplung 6 durch eine Steuereinrichtung 17 automatisch eine Abstimmung aller - für die Energieversorgung und den Motorbetrieb erforderlichen - Betriebsparameter auf den Verbrennungsmotor 5 durchgeführt (Übertragung der Regelhoheit).

Eine Drehzahlregelung des Elektromotors 13 wird dabei inaktiv und der Verbrennungsmotor 5 treibt das Verteilergetriebe 7 mit der momentan erforderlichen Leistung an. Um diesen unterbrechungsfreien Wechsel sicherzustellen, werden beide Motoren 5, 13 mit derselben Steuereinrichtung 17 angesteuert. Abschließend wird durch den Hauptschalter 18 die Energiezufuhr von der Oberleitung 14 auf den Elektromotor 13 unterbrochen. Das geschieht günstigerweise automatisiert durch eine Ansteuerung des Hauptschalters 18 mittels der Steuereinrichtung 17.

Für einen unter uneingeschränktem Lastbetrieb der Gleisbaumaschine 1 erfolgenden Wechsel der Energieversorgung vom Verbrennungs- zum Elektromotor 5 bzw. 13 wird der Hauptschalter 18 zur elektrischen Kopplung des Elektromotors 13 mit dem an die Oberleitung 14 angelegten Stromabnehmer 15 betätigt. Daraufhin erfolgt mittels der Steuereinrichtung 17 automatisch eine Abstimmung aller - für die Energieversorgung und den Motorbetrieb erforderlichen - Betriebsparameter auf den Elektromotor 13 (Übergabe der Regelhoheit).

Konkret wird bei vorgeladenem Zwischenkreis 12 die Drehzahlregelung des Elektromotors 13 aktiviert, wobei eine vorgegebene Drehzahl und ein Drehmoment des Elektromotors 13 an eine wegzuschaltende Leistung des Verbrennungsmotors 5 abgestimmt sind. Anschließend wird der Verbrennungsmotor 5 durch Betätigung der zugeordneten Kupplung 6 vom Verteilergetriebe 7 getrennt.

Der gesamte Wechsel wird günstigerweise mittels der Steuereinrichtung 17 automatisch durchgeführt. Somit bildet die Steuereinrichtung 17 ein zentrales Element, das beide Motoren 5, 13 sowie den Hauptschalter 18 ansteuert. Zum Auslösen einer Umschaltung zwischen den beiden Motoren 5, 13 ist die Steuereinrichtung 17 mit einer Bedieneinheit verbunden. Eine Auslösung kann aber auch automatisch erfolgen, beispielsweise nach Ablauf einer vorgegebenen Zeitspanne.

Bekanntlich sind aneinander grenzende Sektoren der Oberleitung 14 durch sogenannte Überleitstellen 20 (schematisch in Fig. 1 angedeutet) voneinander getrennt. Für höhere Fahrzeuggeschwindigkeiten ist es infolge der vorhandenen kinetischen Energie kein Problem, den Elektroantrieb kurzeitig zu unterbrechen, um die Überleitstelle 20 antriebslos zu überfahren.

Für ein Überfahren von Überleitstellen 20 der Oberleitung 14 unter Lastbetrieb der Gleisbaumaschine 1 wird nach Aktivierung der Steuereinrichtung 17 vor der Überleitstelle 20 automatisch ein Wechsel der Energieversorgung vom Elektro- auf den Verbrennungsmotor 13, 5 und nach einem einstellbaren Zeitablauf oder einer vorgegebenen zurückgelegten Wegstrecke ein automatischer Wechsel der Energieversorgung vom Verbrennungs- auf den Elektromotor 5, 13 durchgeführt. Dabei kann es auch günstig sein, wenn der Steuereinrichtung 17 mittels Sensoren gemeldet wird, dass das Passieren einer Überleitstelle 20 abgeschlossen ist. Eine solche Meldung löst dann automatisch einen Wechsel zurück zum Elektromotor 13 aus.

## Patentansprüche

1. Gleisbaumaschine (1) mit einem auf einem Gleis (2) verfahrbaren Maschinenrahmen (3), verschiedenen Arbeitsaggregaten (4) sowie mit einem Verbrennungsmotor (5), der über eine Kupplung (6) mit einem Verteilergetriebe (7) verbindbar ist, wobei als alternativer Antrieb des Verteilergetriebes (7) ein Elektromotor (13) vorgesehen ist,
***dadurch gekennzeichnet, dass***
der Elektromotor (13) mit einem Zwischenkreis (12) gekoppelt ist, welcher mittels eines höhenverstellbaren, an eine Oberleitung (14) des Gleises (2) anlegbaren Stromabnehmers (15) mit elektrischer Energie versorgbar ist, wobei weiterhin vorgesehen ist:
a) der Elektromotor (13) ist als alternativer Antrieb zur permanenten Energieversorgung eines Hydrauliksystems (10) mit an das Verteilergetriebe (7) angeschlossenen Hydraulikpumpen (8) und von diesen versorgten diversen hydraulischen Antrieben (9) vorgesehen,
b) zur alternativen Energieversorgung des mit dem Elektromotor gekoppelten Zwischenkreises (12) ist ein Generator (16) oder ein elektrischer Energiespeicher (21) vorgesehen.

2. Gleisbaumaschine (1) nach Anspruch 1, **dadurch gekennzeichnet, dass** der Verbrennungsmotor (5) und der Elektromotor (13) mittels einer Steuereinrichtung (17) angesteuert sind, die zur Abstimmung von Betriebsparametern zwischen den beiden Motoren (5, 13) eingerichtet ist.

3. Gleisbaumaschine (1) nach Anspruch 1 oder 2, **dadurch gekennzeichnet, dass** der Elektromotor (13) zur alternativen Energieversorgung des Zwischenkreises (12) in einem generatorischen Betrieb durch den Verbrennungsmotor (5) antreibbar ist.

4. Gleisbaumaschine (1) nach einem der Ansprüche 1 bis 3, **dadurch gekennzeichnet, dass** an den Zwischenkreis ein Spannungsbegrenzer angeschlossen ist.

5. Verfahren für den Betrieb eines Energieversorgungssystems (11) zum Antrieb diverser Arbeitsaggregate (4) und Antriebe (9) einer - auf einem eine elektrische Oberleitung (14) aufweisenden Gleis (2) verfahrbaren - Gleisbaumaschine (1), **dadurch gekennzeichnet, dass** ein Hydrauliksystem (10) mit Hydraulikpumpen (8) und von diesen versorgten diversen hydraulischen Antrieben (9) durch einen Verbrennungsmotor (5) oder einen mit einem Zwischenkreis gekoppelten Elektromotor (13) mit Energie versorgt wird, dass der Zwischenkreis durch die Oberleitung (14) gespeisten oder durch einen Generator (16) oder einen elektrischen Energiespeicher (21) versorgt wird und dass mittels einer Steuereinrichtung (17) eine Umschaltung zwischen Verbrennungs- und Elektromotor (5, 13) in einem die hydraulischen Antriebe (9) des Hydrauliksystems (10) permanent mit Energie versorgenden Lastbetrieb durchgeführt wird.

6. Verfahren nach Anspruch 5, **dadurch gekennzeichnet, dass** für einen Wechsel der Energieversorgung vom Elektro- zum Verbrennungsmotor (13, 5)
a) der Verbrennungsmotor bei einer von einem Verteilergetriebe (7) gelösten Kupplung (6) auf eine für den Lastbetrieb erforderliche Drehzahl hochgefahren wird,
b) mit einem Schließen der Kupplung (6) automatisch durch die Steuereinrichtung (17) eine Abstimmung aller - für die Energieversorgung und den Motorbetrieb erforderlichen - Betriebsparameter auf den Verbrennungsmotor (5) erfolgt
c) die Energiezufuhr von der Oberleitung (14) auf den Elektromotor (13) unterbrochen wird.

7. Verfahren nach Anspruch 5 oder 6, **dadurch gekennzeichnet, dass** für einen Wechsel der Energieversorgung vom Verbrennungs- zum Elektromotor (5, 13)
a) zur Aktivierung der Energiezufuhr mittels des an die Oberleitung (14) angelegten Stromabnehmers (15) ein Hauptschalter (18) geschlossen wird,
b) mit dem Schließen des Hauptschalters automatisch durch die Steuereinrichtung (17) eine Abstimmung aller - für die Energieversorgung und den Motorbetrieb erforderlichen - Betriebsparameter auf den Elektromotor (13) erfolgt,
b) der Verbrennungsmotor (13) mittels einer Kupplung (6) von einem Verteilergetriebe (7) gelöst wird.

8. Verfahren nach Anspruch 5, 6 oder 7, **dadurch gekennzeichnet, dass** für ein Überfahren einer Überleitstelle (20) der Oberleitung (14) nach Aktivierung der Steuereinrichtung (17) automatisch sowie unter Lastbetrieb ein Wechsel der Energieversorgung vom Elektro- auf den Verbrennungsmotor (13, 5) und nach Passieren der Überleitstelle (20) ein Wechsel der Energieversorgung vom Verbrennungs- auf den Elektromotor (5, 13) durchgeführt wird.

9. Verfahren nach Anspruch 8, **dadurch gekennzeichnet, dass** ab dem Wechsel der Energieversorgung vom Elektro- auf den Verbrennungsmotor (13, 5) automatisch nach Ablauf einer vorgegebenen Zeitspanne oder nach Zurücklegung einer vorgegebenen Wegstrecke der Wechsel der Energieversorgung vom Verbrennungsauf den Elektromotor (5, 13) erfolgt.

## Claims

1. A track maintenance machine (1) having a machine frame (3) mobile on a track (2), various working units (4), and a combustion engine (5) which may be connected via a clutch (6) to a transfer case (7), wherein an electric motor (13) is provided as alternative drive of the transfer case (7), **characterized in that** the electric motor (13) is coupled to an intermediate circuit (12) which can be supplied with electric energy by means of a vertically adjustable pantograph (15) which may be applied to a catenary (14) of the track (2), wherein it is further provided that:
a) the electric motor (13) is provided as alternative drive for permanent energy supply of a hydraulic system (10) having hydraulic pumps (8), connected to the transfer case (7), and various hydraulic drives (9) supplied by the same,
b) a generator (16) or an electric energy store (21) is provided for alternative energy supply of the intermediate circuit (12) coupled to the electric motor.

2. A track maintenance machine (1) according to claim 1, **characterized in that** the combustion engine (5) and the electric motor (13) are controlled by means of a control device (17) which is designed for coordinating operating parameters between the two engines (5, 13).

3. A track maintenance machine (1) according to claim 1 or 2, **characterized in that**, for alternative energy supply of the intermediate circuit (12), the electric motor (13) can be driven in a generator operation by the combustion engine (5).

4. A track maintenance machine (1) according to one of claims 1 to 3, **characterized in that** a voltage limiter is connected to the intermediate circuit.

5. A method for operation of an energy supply system (11) for actuation of various working units (4) and drives (9) of a track maintenance machine (1) which is mobile on a track (2) having an electrical catenary (14), **characterized in that** a hydraulic system (10) having hydraulic pumps (8) and various hydraulic drives (9) supplied by the same is supplied with energy by a combustion engine (5) or an electric motor (13) coupled to an intermediate circuit, that the intermediate circuit is fed by the catenary (14) or supplied by a generator (16) or an electric energy store (21), and that a change between combustion engine (5) and electric motor (13) is carried out by means of a control device (17) in a load operation permanently supplying the hydraulic drives (9) of the hydraulic system (10) with energy.

6. A method according to claim 5, **characterized in that**, for a change of the energy supply from electric motor (13) to combustion engine (5),
a) the combustion engine - with the clutch (6) being released from the transfer case (7) - is accelerated up to a speed of rotation as required for the load operation,
b) with the engaging of the clutch (6), all operational parameters required for the energy supply and the motor operation are automatically matched to the combustion engine (5) by the control device (17),
c) the energy supply from the catenary (14) to the electric motor (13) is interrupted.

7. A method according to claim 5 or 6, **characterized in that**, for a change of the energy supply from combustion engine (5) to electric motor (13),
a) for activation of the energy supply by means of the pantograph (15) applied to the catenary (14), a main switch (18) is closed,
b) with the closing of the main switch, all operational parameters required for the energy supply and the motor operation are automatically matched to the electric motor (5) by the control device (17),
b) the combustion engine (13) is disengaged from a transfer case (7) by means of a clutch (6).

8. A method according to claim 5, 6 or 7, **characterized in that**, for passing over a transfer point (20) of the catenary (14) after activation of the control device (17), a change of the energy supply from electric motor (13) to combustion engine (5) before the transfer point 20 and, after passing over the transfer point (20), a change of the energy supply from combustion engine (5) to electric motor (13) takes place automatically and under load operation.

9. A method according to claim 8, **characterized in that** the change of the energy supply from combustion engine (5) to electric motor (13) takes place automatically after a predetermined time span has elapsed, or a prescribed path has been covered, starting with the change-over of the energy supply from the electric motor (13) to the combustion engine (5).

## Revendications

1. Machine de pose de voie (1) avec un châssis de machine (3) pouvant être déplacé sur une voie ferrée (2), différents modules de travail (4) ainsi qu'avec un moteur à combustion interne (5) qui peut être connecté par le biais d'un couplage (6) à une boîte de transfert (7), dans laquelle un moteur électrique (13) est prévu en tant qu'entraînement alternatif de la boîte de transfert (7),
**caractérisée en ce que**
le moteur électrique (13) est couplé à un circuit intermédiaire (12) qui peut être alimenté en énergie électrique au moyen d'un pantographe réglable en hauteur (15), pouvant être posé sur une ligne de contact (14) de la voie ferrée (2), dans laquelle il est en outre prévu :
a) le moteur électrique (13) est pourvu en tant qu'entraînement alternatif pour l'alimentation en énergie permanente d'un système hydraulique (10) de pompes hydrauliques (8) raccordées à la boîte de transfert (7) et de divers entraînements hydrauliques (9) alimentés par celles-ci,
b) un générateur (16) ou un accumulateur d'énergie électrique (21) est prévu pour l'alimentation en énergie alternative du circuit intermédiaire (12) couplé au moteur électrique.

2. Machine de pose de voie (1) selon la revendication 1, **caractérisée en ce que** le moteur à combustion interne (5) et le moteur électrique (13) sont commandés au moyen d'un dispositif de commande (17) qui est configuré pour le réglage de paramètres de fonctionnement entre les deux moteurs (5, 13).

3. Machine de pose de voie (1) selon la revendication 1 ou 2, **caractérisée en ce que** le moteur électrique (13) peut être entraîné par le moteur à combustion interne (5) pour l'alimentation en énergie alternative du circuit intermédiaire (12) dans un fonctionnement générateur.

4. Machine de pose de voie (1) selon une des revendications 1 à 3, **caractérisée en ce qu'**un limiteur de tension est raccordé au circuit intermédiaire.

5. Procédé pour le fonctionnement d'un système d'alimentation en énergie (11) pour l'entraînement de divers modules de travail (4) et entraînements (9) d'une machine de pose de voie (1) pouvant être déplacée sur une voie ferrée (2) présentant une ligne de contact électrique (14), **caractérisé en ce qu'**un système hydraulique (10) avec des pompes hydrauliques (8) et divers entraînements hydrauliques (9) alimentés par celles-ci est alimenté en énergie par un moteur à combustion interne (5) ou un moteur électrique (13) couplé à un circuit intermédiaire, que le circuit intermédiaire est chargé par la ligne de contact (14) ou alimenté par un générateur (16) ou un accumulateur d'énergie électrique (21) et qu'une commutation entre moteur à combustion interne et électrique (5, 13) est réalisée au moyen d'un dispositif de commande (17) dans un fonctionnement en charge alimentant de manière permanente en énergie les entraînements hydrauliques (9) du système hydraulique (10).

6. Procédé selon la revendication 5, **caractérisé en ce que** pour un changement de l'alimentation en énergie du moteur électrique au moteur à combustion interne (13, 5)
a) le moteur à combustion interne est démarré à une vitesse de rotation nécessaire pour le fonctionnement en charge dans le cas d'un couplage (6) détaché d'une boîte de transfert (7),
b) un réglage de tous les paramètres de fonctionnement nécessaires pour l'alimentation en énergie et le fonctionnement des moteurs sur le moteur à combustion interne (5) s'effectue avec une fermeture du couplage (6) automatiquement par le dispositif de commande (17),
c) l'amenée d'énergie est interrompue par la ligne de contact (14) sur le moteur électrique (13).

7. Procédé selon la revendication 5 ou 6, **caractérisé en ce que** pour un changement de l'alimentation en énergie du moteur à combustion interne au moteur électrique (5, 13)
a) un commutateur principal (18) est fermé pour l'activation de l'amenée d'énergie au moyen du pantographe (15) posé sur la ligne de contact (14),
b) un réglage de tous les paramètres de fonctionnement nécessaires pour l'alimentation en énergie et le fonctionnement des moteurs sur le moteur électrique (13) s'effectue avec la fermeture du commutateur principal automatiquement par le dispositif de commande (17),
c) le moteur à combustion interne (13) est détaché d'une boîte de transfert (7) au moyen d'un couplage (6).

8. Procédé selon la revendication 5, 6 ou 7, **caractérisé en ce qu'**un changement de l'alimentation en énergie du moteur électrique au moteur à combustion interne (13, 5) est réalisé pour un franchissement d'une jonction (20) de la ligne de contact (14) après activation du dispositif de commande (17) automatiquement ainsi qu'en fonctionnement en charge, et un changement de l'alimentation en énergie du moteur à combustion interne au moteur électrique (5, 13) est réalisé après le passage de la jonction (20).

9. Procédé selon la revendication 8, **caractérisé en ce que** le changement de l'alimentation en énergie du moteur à combustion interne au moteur électrique (5, 13) s'effectue à partir du changement de l'alimentation en énergie du moteur électrique au moteur à combustion interne (13, 5) automatiquement après écoulement d'un laps de temps prédéfini ou après le parcours d'une distance prédéfinie.
